(19) Europäisches Patentamt
European Patent Office
Office européen des brevets

(11)  **EP 3 649 019 B1**

(12)  **FASCICULE DE BREVET EUROPEEN**

(45) Date de publication et mention
de la délivrance du brevet:
**10.03.2021  Bulletin 2021/10**

(21) Numéro de dépôt: **18734515.2**

(22) Date de dépôt: **22.06.2018**

(51) Int Cl.:
**B60R 13/08** *(2006.01)*    **B62D 1/16** *(2006.01)*
**B60R 16/02** *(2006.01)*

(86) Numéro de dépôt international:
**PCT/EP2018/066729**

(87) Numéro de publication internationale:
**WO 2019/007706 (10.01.2019 Gazette 2019/02)**

(54)  **PASSE-CLOISON POUR UN ORGANE DESTINE A TRAVERSER UNE CLOISON**

DURCHFÜHRUNGSVORRICHTUNG FÜR EIN ELEMENT, WELCHES DURCH EINE TRENNWAND GEFÜHRT WIRD

PASS THROUGH GROMMET FOR AN ORGAN PASSING THROUGH A PARTITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **04.07.2017  FR 1756308**

(43) Date de publication de la demande:
**13.05.2020  Bulletin 2020/20**

(73) Titulaire: **LE JOINT FRANÇAIS SNC**
**75008 Paris (FR)**

(72) Inventeurs:
• **GOURGUES, Philippe**
**10004 Cáceres (ES)**
• **TANNEAU, Olivier**
**45200 Montargis (FR)**
• **CIRMAN, Sébastien**
**45120 Châlette Sur Loing (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**GB-A- 2 343 718    JP-A- 2001 153 270**

**Description**

L'invention concerne un passe-cloison.

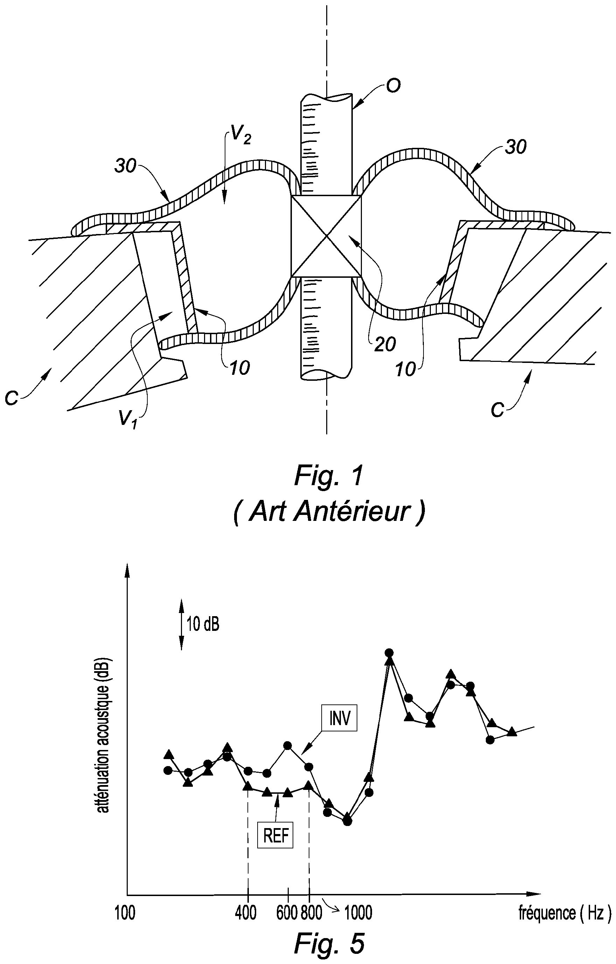

On a représenté sur la figure 1 un passe-cloison selon l'art antérieur.

Ce passe-cloison est un passe-cloison pour au moins un organe O, en l'occurrence une colonne de direction, destiné à traverser une cloison C séparant un habitacle d'un espace moteur d'un véhicule automobile. Ce passe-cloison comporte :

- un châssis 10, rigide, destiné à être fixé à ladite cloison C de sorte à définir un premier volume V1 entre le châssis et la cloison ;
- un moyen 20 de montage dudit organe, en l'occurrence un palier dans la mesure où l'organe O est une colonne de direction ; et
- une paroi 30 plus souple que le châssis 10, cette paroi 30 étant à la fois fixée au châssis 10 et au moyen 20 de montage, de sorte un définir un deuxième volume V2 délimité par ledit châssis 10, ladite paroi 30 et ledit moyen 20 de montage.

Un passe-cloison tel que celui qui est représenté sur la figure 1 présente certaines propriétés d'isolation acoustique (bruit provenant de l'espace moteur du véhicule automobile), mais qui ne sont pas parfaites, notamment pour certaines fréquences.

Cette problématique est connue et différentes solutions ont été proposées pour y remédier.

On a par exemple proposé de remplir le volume du passe-cloison avec un matériau absorbant les ondes acoustiques (JP5206929, KR20120048298 ou encore WO 2016/043245).

On a aussi proposé d'ajouter un joint torique en élastomère autour du passe-cloison (FR 2887 208).

On a encore proposé de réaliser des chicanes afin d'accroître le nombre de réflexions dans le passe-cloison et ainsi d'augmenter l'absorption des ondes acoustiques par les parois du passe-cloison (JP10246334)

Le document GB 2 343 718 A décrit un passe-cloisin selon le préambule de la revendication 1.

Ces solutions ne permettent cependant pas nécessairement d'obtenir un excellent contrôle de la gamme de fréquences des ondes acoustiques dans laquelle on obtient un filtrage.

Un objectif de l'invention est de proposer un passe-cloison dont les performances d'isolation acoustique sont améliorées, dans des gammes de fréquences contrôlées Cet objectif est atteint au moyen d'un passe-cloisin selon l'une des revendications 1 ou 5, ainsi qu'au moyen d'un ensemble selon la revendication 10.

A cet effet, l'invention propose un passe-cloison pour au moins un organe destiné à traverser une cloison séparant un habitacle d'un espace moteur d'un véhicule automobile, ledit passe-cloison comportant :

- un châssis, rigide, destiné à être fixé à ladite cloison de sorte à définir un premier volume entre le châssis et la cloison ;
- un moyen de montage dudit organe ; et
- une paroi plus souple que le châssis, cette paroi étant à la fois fixée au châssis et au moyen de montage, de sorte un définir un deuxième volume délimité par ledit châssis, ladite paroi et ledit moyen de montage ;
  caractérisé en ce que le châssis comporte au moins un orifice permettant une communication fluidique entre le premier volume et le deuxième volume.

Ce passe-cloison pourra également présenter l'une au moins des caractéristiques suivantes, prises seules ou en combinaison :

- le châssis est réalisé en un matériau plastique ;
- la paroi est réalisée en un matériau choisi parmi un élastomère, un thermoplastique élastomère ou un thermoplastique ;
- le châssis comporte une pluralité d'orifices permettant une communication fluidique entre le premier volume et le deuxième volume.

A cet effet également, et dans le but de répondre au même objectif, l'invention propose un passe-cloison pour au moins un organe destiné à traverser une cloison séparant un habitacle d'un espace moteur d'un véhicule automobile, ledit passe-cloison comportant :

- un châssis, rigide, destiné à être fixé à ladite cloison de sorte à définir un premier volume entre le châssis et la cloison ;
- un moyen de montage dudit organe ;
- une paroi plus souple que le châssis, cette paroi étant à la fois fixée au châssis et au moyen de montage, de sorte un définir un deuxième volume délimité par ledit châssis, ladite paroi et ledit moyen de montage ;

- un châssis additionnel, également rigide, fixé sur le châssis, de sorte à séparer le deuxième volume en deux sous-volumes, caractérisé en ce que le châssis additionnel comporte au moins un orifice permettant une communication fluidique entre les deux sous-volumes du deuxième volume.

Ce passe-cloison pourra également présenter l'une au moins des caractéristiques suivantes, prises seules ou en combinaison :

- le châssis additionnel est réalisé en un matériau plastique ;
- la paroi est réalisée en un matériau choisi parmi un élastomère, un thermoplastique élastomère ou un thermoplastique ;
- le châssis additionnel comporte une pluralité d'orifices permettant une communication fluidique entre les deux sous-volumes du deuxième volume ;
- le ou chaque orifice se présente sous la forme d'une fente formée entre ledit châssis additionnel et ladite paroi du passe-cloison permettant de définir le deuxième volume.

Par ailleurs, l'invention propose également un ensemble comportant :

- une cloison séparant un habitacle d'un espace moteur d'un véhicule automobile ;
- un organe traversant ladite cloison; et
- un passe-cloison selon l'invention, monté à la fois sur l'organe et sur la cloison.

Dans cet ensemble, l'organe pourra être choisi parmi une colonne de direction, un câble ou un faisceau de câbles.

L'invention sera mieux comprise et d'autres buts, avantages et caractéristiques de celle-ci apparaîtront plus clairement à la lecture de la description qui suit et qui est faite au regard des figures annexées suivantes :

- La figure 2 représente un passe-cloison selon un premier mode de réalisation de l'invention ;
- La figure 3 représente un passe-cloison selon un deuxième mode de réalisation de l'invention ;
- La figure 4 représente une variante du deuxième mode de réalisation ;
- La figure 5 représente des résultats de mesure d'atténuation acoustique en fonction de la fréquence.

L'invention concerne un passe-cloison pour au moins un organe O destiné à traverser une cloison C séparant un habitacle d'un espace moteur d'un véhicule automobile.

L'organe O en question peut être varié.

Il peut s'agir par exemple d'une colonne de direction du véhicule automobile.

Il peut encore s'agir d'un câble ou plus généralement d'un faisceau de câbles reliant par exemple, des commandes situées dans l'habitacle vers des actionneurs situés du côté de l'espace moteur ou, selon un autre exemple, reliant des capteurs situés dans l'espace moteur vers un afficheur situé dans l'habitacle.

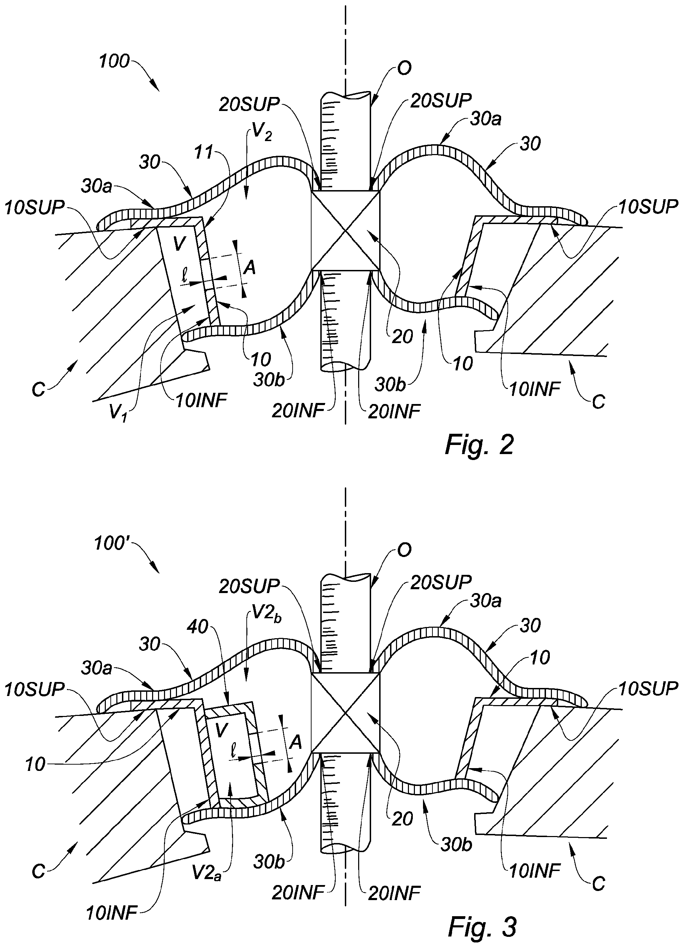

Un premier mode de réalisation d'un passe-cloison selon l'invention est représenté sur la figure 2, avec en l'occurrence un organe O formé par une colonne de direction.

Le passe-cloison 100 comporte :

- un châssis 10, rigide, destiné à être fixé à ladite cloison C de sorte à définir un premier volume V1 entre le châssis 10 et la cloison C ;
- un moyen 20 de montage dudit organe O, qui est constitué dans le cas d'espèce par un palier pour la colonne de direction; et
- une paroi 30 plus souple que le châssis 10, cette paroi 30 étant à la fois fixée au châssis 10 et au moyen 20 de montage, de sorte un définir un deuxième volume V2 délimité par ledit châssis 10 rigide, ladite paroi 30 et ledit moyen de montage 20.

En pratique, le châssis 10 s'étend généralement de façon circonférentielle, autour de l'organe O, pour définir le volume V1.

En pratique également, la paroi 30 se présente généralement sous la forme d'une première paroi 30a fixée à la fois sur la partie supérieure 10SUP du châssis 10 et sur la partie supérieure 20SUP du moyen de montage 20 et d'une deuxième paroi 30b fixée à la fois sur la partie inférieure 10INF du châssis 10 et sur la partie inférieure 20INF du moyen de montage 20. Chaque paroi 30a, 30b est généralement circonférentielle de sorte à former le volume V2, circonférentiel, autour de l'organe O.

Dans le cadre de ce premier mode de réalisation, le châssis 10 comporte au moins un orifice OR permettant une communication fluidique entre le premier volume V1 et le deuxième volume V2.

On comprend que cet orifice est réalisé dans une paroi 11 du châssis, qui sépare le premier volume V1 du deuxième volume V2.

La présence de l'orifice OR permet de définir un résonateur acoustique entre le premier volume V1 et le deuxième volume V2.

Ceci s'effectue de manière particulièrement avantageuse puisque, par rapport à un passe-cloison de l'art antérieur, il suffit de réaliser au moins un orifice dans le châssis rigide, sur la paroi 11 de ce châssis rigide, qui sépare le premier volume V1 du deuxième volume V2.

Grâce à cela, on peut filtrer alors filtrer des fréquences (vibrations, bruits acoustiques) provenant de l'espace moteur pour éviter qu'elles ne passent vers l'habitacle.

En effet, en pratique, la fréquence de résonance du résonateur ainsi formé s'exprime, en première approximation (à savoir notamment sans correction liée à la géométrie du col) sous la forme suivante :

$$f_R = \frac{c}{2\pi} \sqrt{\frac{A}{V l}} \qquad \text{(Eq. 1)}$$

où :

c est la vitesse du son dans le milieu fluide considéré
A est la section de l'orifice OR
l est la profondeur de l'orifice OR (correspond à l'épaisseur de la paroi 11 du châssis 10 rigide), et
V est le volume du premier volume V1.

Pour ajuster la fréquence de résonance, et ainsi filtrer des fréquences autour de cette fréquence de résonance, il suffit alors de régler la section A de l'orifice OR. En effet, dans ce mode de réalisation, il est particulièrement avantageux, d'un point de vue industriel, de ne pas modifier les paramètres V et l au moment de la fabrication, ces paramètres étant alors ceux d'un passe-cloison selon l'art antérieur. Par ailleurs, les volumes V1 et V2 sont remplis d'air, en tant que fluide.

Bien entendu, en fonction de l'application envisagée, on peut avoir besoin de modifier les paramètre V et/ou l et dans ce cas, la fabrication pourra être adaptée en conséquence. A cet effet, on pourra modifier la forme du châssis 10 rigide de sorte à définir un premier volume V1 de valeur V plus ou moins importante. A cet effet également, en complément ou en variante, on pourra modifier l'épaisseur de paroi du châssis 10 rigide, afin de définir comme on le souhaite la valeur l de la profondeur de l'orifice OR.

Dans le cas le plus simple, on n'aura donc qu'à définir la section A de l'orifice OR.

A cet égard, la forme de l'orifice importe peu.

A cet égard également, il importe peu qu'il n'y ait qu'un seul orifice, de section A ou une pluralité d'orifices, dont la section totale est A.

Dans tous les cas, le premier volume V1 est donc un volume qu'on peut qualifier de fermé, mais muni d'un ou plusieurs orifices.

On notera que le châssis 10, rigide, peut être réalisé en un matériau plastique.

Par ailleurs, la paroi 20, plus souple que le châssis 10, peut être réalisée en un matériau choisi parmi un élastomère, un thermoplastique élastomère ou un thermoplastique.

La figure 3 représente un deuxième mode de réalisation d'un passe-cloison selon l'invention, avec en l'occurrence un organe O formé par une colonne de direction.

Le passe-cloison 100' comporte :

- un châssis 10, rigide, destiné à être fixé à ladite cloison C de sorte à définir un premier volume V1 entre le châssis 10 et la cloison C ;
- un moyen 20 de montage dudit organe O, qui est constitué dans le cas d'espèce par un palier pour la colonne de direction;
- une paroi 30 plus souple que le châssis 10, cette paroi 30 étant à la fois fixée au châssis 10 et au moyen 20 de montage, de sorte un définir un deuxième volume V2 délimité par ledit châssis 10 rigide, ladite paroi 30 et ledit moyen de montage 20 ; et
- un châssis additionnel 40, également rigide, fixé sur le châssis 10 de sorte à séparer le deuxième volume V2 en deux sous-volumes V2a, V2b.

En pratique, le châssis 10 s'étend généralement de façon circonférentielle, autour de l'organe O, pour définir le volume V1.

En pratique également, la paroi 30 se présente généralement sous la forme d'une première paroi 30a fixée à la fois sur la partie supérieure 10SUP du châssis 10 et sur la partie supérieure 20SUP du moyen de montage 20 et d'une deuxième paroi 30b fixée à la fois sur la partie inférieure 10INF du châssis 10 et sur la partie inférieure 20INF du moyen de montage 20. Chaque paroi est généralement circonférentielle de sorte à former le volume V2, circonférentiel, autour de l'organe O.

Dans le cadre de ce deuxième mode de réalisation, le châssis additionnel 40 comporte au moins un orifice OR' permettant une communication fluidique entre les deux sous-volumes V2a, V2b. IL convient de noter que le sous-volume V2a peut être un volume circonférentiel, autour de l'organe O, tout comme ceci est généralement le cas pour le sous-volume V2b. Cependant, on peut aussi prévoir, en fonction de l'application exacte et pour des questions d'encombrement, que le sous-volume V2a soit défini localement, à savoir sans faire le tour complet de l'organe O.

Cette orifice OR' correspond, fonctionnellement, à l'orifice OR du premier mode de réalisation et il peut donc être attribué à cet orifice OR' une section A et une profondeur l, notamment dans son application pour l'équation 1 (Eq. 1).

Cependant, dans ce cas, le sous-volume V2a remplit la même fonction que le premier volume V1 du premier mode de réalisation. Dans l'équation 1 (Eq. 1), on associe donc le volume V à celui du sous-volume V2a.

Là également, on pourra prévoir que le châssis additionnel 40 comporte une pluralité d'orifices permettant une communication fluidique entre les deux sous-volumes V2a, V2b du deuxième volume V2.

Le deuxième mode de réalisation nécessite, en pratique, une conception un peu plus compliquée puisqu'il faut, par rapport à un passe-cloison de l'art antérieur, prévoir un châssis additionnel 40 pour créer le sous-volume V2a. Par ailleurs, ce deuxième mode de réalisation ne prend pas avantage de la présence du volume V1 pour créer un résonateur acoustique.

En revanche, il fournit plus de flexibilité pour modifier le volume V de l'équation (Eq.1), qui est en l'occurrence celui du sous-volume V2a, sans modifier le volume et donc la forme même du châssis 10, et constitue de ce fait une solution alternative industriellement moins risquée que celle consistant, quand cela est nécessaire, à modifier justement le volume et la forme du premier volume dans le cas du premier mode de réalisation.

On notera que le châssis 10, rigide, peut être réalisé en un matériau plastique.

Comme pour le premier mode de réalisation, la paroi 20 pourra être réalisée en un matériau choisi parmi un élastomère, un thermoplastique élastomère ou un thermoplastique.

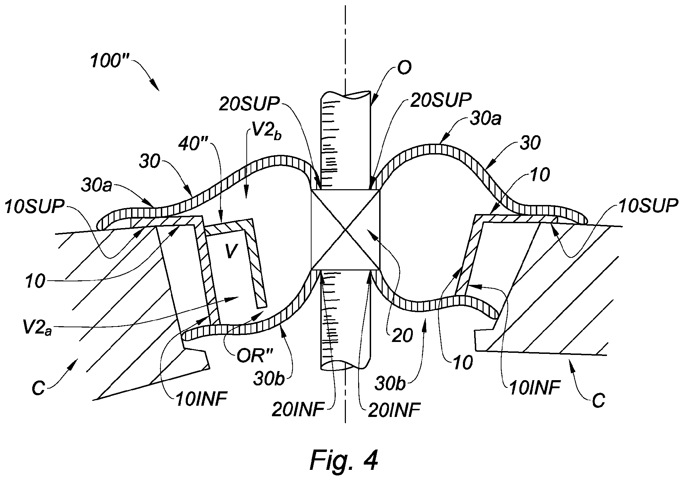

La figure 4 représente une variante de réalisation au deuxième mode de réalisation représenté sur la figure 3.

Cette variante reprend le principe général du deuxième mode de réalisation, avec l'emploi d'un châssis additionnel 40", également rigide, fixé sur le châssis 10 de sorte à séparer le deuxième volume V2 en deux sous-volumes V2a, V2b.

Cependant, dans cette variante, l'orifice OR" se présente sous la forme d'une fente formée entre le châssis additionnel 40" et la paroi 30 (et plus précisément à titre d'exemple sur la figure 4, la paroi 30b) du passe-cloison 100" formant le deuxième volume V2.

Tout le reste est identique. En particulier, dans cette variante, il est tout à fait envisageable de prévoir plusieurs orifices, à savoir plusieurs fentes.

Cette variante peut s'avérer plus simple à mettre en œuvre (fabrication notamment) que la construction représentée sur la figure 3.

On notera enfin que l'invention concerne également un ensemble 200 comportant :

- une cloison C séparant un habitacle d'un espace moteur d'un véhicule automobile ;
- un organe O traversant ladite cloison; et
- un passe-cloison 100, 100', 100" selon l'une quelconque des réalisations décrites précédemment, ce passe-cloison étant monté à la fois sur l'organe O et sur la cloison C.

L'organe O peut notamment être une colonne de direction, un câble ou un faisceau de câbles.

Exemple

Pour cet exemple, nous considérons le mode de réalisation de la figure 2.

Le volume V (résonateur) présente un volume de valeur V = 170 cm$^3$.

Le volume V2 présente un volume de valeur 560 cm$^3$.

Il est prévu N = 3 orifices circulaires, identiques, dans le châssis 10. Chaque orifice présente un diamètre d = 10mm (rayon r d'un orifice, r = 5mm) et une profondeur l = 2mm. La section $A_{tot}$ de l'ensemble des orifices s'exprime donc $A_{tot} = N.\pi.r^2$.

Le fluide considéré est de l'air, de célérité c = 340 m/s, compte tenu des conditions de température (température ambiante) et de pression considérées (atmosphérique).

Par ailleurs, pour plus de justesse, et compte tenu de la géométrie particulière du col du résonateur, la fréquence de résonance $f_R$ s'exprime plus précisément :

$$f_R = \frac{c}{2\pi} \sqrt{\frac{A_{tot}}{V(l+1,7r)}} \qquad\qquad \text{(Eq. 2)}$$

où la quantité 1,7r est la correction de col ; les autres paramètres ayant déjà été définies dans le cadre de cet exemple et/ou à l'appui de l'équation (Eq. 1).

Dans ces conditions, la valeur théorique de la fréquence de résonance est d'environ 620 Hz.

La figure 5 représente plus précisément les mesures effectuées avec la conception adoptée dans cet exemple.

Cette figure 5 représente l'évolution mesurée de l'atténuation acoustique (ordonnées, dB) en fonction de la fréquence (Hz) d'une part pour une référence correspondant à la conception de l'art antérieur de la figure 2 (REF) et d'autre part pour l'invention (INV), conformément à la conception précisée dans cet exemple.

En comparant les deux courbes, on relève que la solution proposée dans le cadre de l'invention (INV) permet d'obtenir une atténuation acoustique plus importante que celle obtenue avec la référence (REF) dans la gamme de fréquences comprise entre 400 Hz et 800Hz, à savoir autour de la fréquence théorique de résonance ($f_R$ = 620Hz) de la solution correspondant à l'invention.

Dans la gamme de fréquences précitée, l'atténuation acoustique est plus important avec la solution proposée par l'invention, d'une valeur comprise entre 3dB et 10dB.

L'invention permet donc finalement de façon simple et fiable de déterminer une gamme de fréquences dans laquelle on peut réduire le niveau acoustique. Par ailleurs, comme on peut le constater avec l'exemple fourni précédemment, cette réduction est non négligeable (au moins 3dB et parfois bien plus).

## Revendications

1. Passe-cloison (100) pour au moins un organe (O) destiné à traverser une cloison (C) séparant un habitacle d'un espace moteur d'un véhicule automobile, ledit passe-cloison (100) comportant :

   - un châssis (10), rigide, destiné à être fixé à ladite cloison (C) de sorte à définir un premier volume (V1) entre le châssis et la cloison ;
   - un moyen (20) de montage dudit organe ; et
   - une paroi (30) plus souple que le châssis (10), cette paroi (30) étant à la fois fixée au châssis (10) et au moyen (20) de montage, de sorte un définir un deuxième volume (V2) délimité par ledit châssis (10), ladite paroi (30) et ledit moyen (20) de montage ;
   **caractérisé en ce que** le châssis (10) comporte au moins un orifice (OR) permettant une communication fluidique entre le premier volume (V1) et le deuxième volume (V2).

2. Passe-cloison (100) selon la revendication 1, dans lequel le châssis (10) est réalisé en un matériau plastique.

3. Passe-cloison (100) selon l'une des revendications précédentes, dans lequel la paroi (30) est réalisée en un matériau choisi parmi un élastomère, un thermoplastique élastomère ou un thermoplastique.

4. Passe-cloison (100) selon l'une des revendications précédentes, dans lequel le châssis (10) comporte une pluralité d'orifices permettant une communication fluidique entre le premier volume (V1) et le deuxième volume (V2).

5. Passe-cloison (100', 100") pour au moins un organe (O) destiné à traverser une cloison (C) séparant un habitacle d'un espace moteur d'un véhicule automobile, ledit passe-cloison (100', 100") comportant :

   - un châssis (10), rigide, destiné à être fixé à ladite cloison de sorte à définir un premier volume (V1) entre le châssis et la cloison ;
   - un moyen (20) de montage dudit organe ;
   - une paroi (30) plus souple que le châssis (10), cette paroi (30) étant à la fois fixée au châssis (10) et au moyen (20) de montage, de sorte un définir un deuxième volume (V2) délimité par ledit châssis (10), ladite paroi (30) et ledit moyen (20) de montage ;
   - un châssis additionnel (40, 40"), également rigide, fixé sur le châssis (10), de sorte à séparer le deuxième volume (V2) en deux sous-volumes (V2a, V2b), le châssis additionnel (40) comportant au moins un orifice (OR'1, OR") permettant une communication fluidique entre les deux sous-volumes (V2a, V2b) du deuxième volume (V2).

**6.** Passe-cloison (100', 100") selon la revendication précédente, dans lequel le châssis additionnel (40, 40") est réalisé en un matériau plastique.

**7.** Passe-cloison (100', 100") selon l'une des revendications 5 ou 6, dans lequel la paroi (30) est réalisée en un matériau choisi parmi un élastomère, un thermoplastique élastomère ou un thermoplastique.

**8.** Passe-cloison (100', 100") selon l'une des revendications 5 à 7, dans lequel le châssis additionnel (40, 40") comporte une pluralité d'orifices permettant une communication fluidique entre les deux sous-volumes (V2a, V2b) du deuxième volume (V2).

**9.** Passe cloison (100") selon l'une des revendications 5 à 8, dans lequel le ou chaque orifice (OR") se présente sous la forme d'une fente formée entre ledit châssis additionnel (40") et ladite paroi (30) du passe-cloison permettant de définir le deuxième volume (V2).

**10.** Ensemble (200) comportant :

- une cloison (C) séparant un habitacle d'un espace moteur d'un véhicule automobile ;
- un organe (O) traversant ladite cloison; et
- un passe-cloison (100, 100', 100") selon l'une des revendications 1 à 4 ou selon l'une des revendications 5 à 9, monté à la fois sur l'organe (O) et sur la cloison (C).

**11.** Ensemble (200) selon la revendication précédente, dans lequel l'organe est choisi parmi une colonne de direction, un câble ou un faisceau de câbles.


**Patentansprüche**

**1.** Schottverschraubung (100) für mindestens ein Organ (O), das dazu bestimmt ist, ein Schott (C) zu durchqueren, das einen Fahrgastraum von einem Motorraum eines Kraftfahrzeugs trennt, wobei die Schottverschraubung (100) Folgendes umfasst:

- ein starres Gestell (10), das dazu bestimmt ist, an dem Schott (C) befestigt zu werden, um ein erstes Volumen (V1) zwischen dem Gestell und dem Schott zu definieren;
- ein Mittel (20) zum Montieren des Organs; und
- eine Wand (30), biegsamer als das Gestell (10), wobei diese Wand (30) sowohl am Gestell (10) als auch am Mittel (20) zum Montieren befestigt ist, um ein zweites Volumen (V2) zu definieren, das durch das Gestell (10), die Wand (30) und das Mittel (20) zum Montieren begrenzt ist;
**dadurch gekennzeichnet, dass** das Gestell (10) mindestens eine Öffnung (OR) umfasst, die eine Fluidverbindung zwischen dem ersten Volumen (V1) und dem zweiten Volumen (V2) ermöglicht.

**2.** Schottverschraubung (100) nach Anspruch 1, wobei das Gestell (10) aus einem Kunststoffmaterial gefertigt ist.

**3.** Schottverschraubung (100) nach einem der vorstehenden Ansprüche, wobei die Wand (30) aus einem Material gefertigt ist, das aus einem Elastomer, einem Elastomer-Thermoplast oder einem Thermoplast ausgewählt ist.

**4.** Schottverschraubung (100) nach einem der vorstehenden Ansprüche, wobei das Gestell (10) eine Vielzahl von Öffnungen umfasst, die eine Fluidverbindung zwischen dem ersten Volumen (V1) und dem zweiten Volumen (V2) ermöglichen.

**5.** Schottverschraubung (100', 100") für mindestens ein Organ (O), das dazu bestimmt ist, ein Schott (C) zu durchqueren, das einen Fahrgastraum von einem Motorraum eines Kraftfahrzeugs trennt, wobei die Schottverschraubung (100', 100") Folgendes umfasst:

- ein starres Gestell (10), das dazu bestimmt ist, an dem Schott befestigt zu werden, um ein erstes Volumen (V1) zwischen dem Gestell und dem Schott zu definieren;
- ein Mittel (20) zum Montieren des Organs;

- eine Wand (30), biegsamer als das Gestell (10), wobei diese Wand (30) sowohl am Gestell (10) als auch am Mittel (20) zum Montieren befestigt ist, um ein zweites Volumen (V2) zu definieren, das durch das Gestell (10), die Wand (30) und das Mittel (20) zum Montieren begrenzt ist;
- ein zusätzliches, ebenfalls starres Gestell (40, 40"), das an dem Gestell (10) befestigt ist, um das zweite Volumen (V2) in zwei Teilvolumina (V2a, V2b) zu trennen, wobei das zusätzliche Gestell (40) mindestens eine Öffnung (OR'1, OR") umfasst, die eine Fluidverbindung zwischen den beiden Teilvolumina (V2a, V2b) des zweiten Volumens (V2) ermöglicht.

6. Schottverschraubung (100', 100") nach dem vorstehenden Anspruch, wobei das zusätzliche Gestell (40, 40") aus einem Kunststoffmaterial gefertigt ist.

7. Schottverschraubung (100', 100") nach einem der Ansprüche 5 oder 6, wobei die Wand (30) aus einem Material gefertigt ist, das aus einem Elastomer, einem Elastomer-Thermoplast oder einem Thermoplast ausgewählt ist.

8. Schottverschraubung (100', 100") nach einem der Ansprüche 5 bis 7, wobei das zusätzliche Gestell (40, 40") eine Vielzahl von Öffnungen umfasst, die eine Fluidverbindung zwischen den beiden Teilvolumina (V2a, V2b) des zweiten Volumens (V2) ermöglichen.

9. Schottverschraubung (100") nach einem der Ansprüche 5 bis 8, wobei sich die oder jede Öffnung (OR") in der Form eines Schlitzes präsentiert, der zwischen dem zusätzlichen Gestell (40") und der Wand (30) der Schottverschraubung gebildet ist, die es ermöglicht, das zweite Volumen (V2) zu definieren.

10. Einheit (200), Folgendes umfassend:

- ein Schott (C), das einen Fahrgastraum von einem Motorraum eines Kraftfahrzeugs trennt;
- ein Organ (O), das das Schott durchquert; und
- eine Schottverschraubung (100, 100', 100") nach einem der Ansprüche 1 bis 4 oder nach einem der Ansprüche 5 bis 9, das sowohl an dem Organ (O), als auch am Schott (C) montiert ist.

11. Einheit (200) nach dem vorstehenden Anspruch, wobei das Organ aus einer Lenksäule, einem Kabel oder einem Kabelbaum ausgewählt ist.

## Claims

1. Bulkhead fitting (100) for at least one member (O) intended to pass through a bulkhead (C) separating a passenger compartment from an engine compartment of an automotive vehicle, said bulkhead fitting (100) comprising:

- a rigid frame (10) intended to be attached to said bulkhead (C) so as to define a first space (V1) between the frame and the bulkhead;
- a mounting means (20) for said member; and
- a wall (30) that is more flexible than the frame (10), this wall (30) being attached both to the frame (10) and to the mounting means (20), so as to define a second space (V2) delimited by said frame (10), said wall (30) and said mounting means (20);
**characterised in that** the frame (10) comprises at least one opening (OR) allowing fluid communication between the first space (V1) and the second space (V2).

2. Bulkhead fitting (100) according to claim 1, wherein the frame (10) is made of a plastic material.

3. Bulkhead fitting (100) according to one of the preceding claims, wherein the wall (30) is made of a material selected from an elastomer, a thermoplastic elastomer or a thermoplastic.

4. Bulkhead fitting (100) according to one of the preceding claims, wherein the frame (10) comprises a plurality of openings allowing fluid communication between the first space (V1) and the second space (V2).

5. Bulkhead fitting (100', 100") for at least one member (O) intended to pass through a bulkhead (C) separating a passenger compartment from an engine compartment of an automotive vehicle, said bulkhead fitting (100', 100") comprising:

- a rigid frame (10) intended to be attached to said bulkhead so as to define a first space (V1) between the frame and the bulkhead;
- a mounting means (20) for said member;
- a wall (30) that is more flexible than the frame (10), this wall (30) being attached both to the frame (10) and to the mounting means (20), so as to define a second space (V2) delimited by said frame (10), said wall (30) and said mounting means (20);
- an additional frame (40, 40") also rigid, attached to the frame (10) so as to divide the second space (V2) into two sub-spaces (V2a, V2b), the additional frame (40) comprising at least one opening (OR'1, OR") allowing fluid communication between the two sub-spaces (V2a, V2b) of the second space (V2).

6. Bulkhead fitting (100', 100") according to the preceding claim, wherein the additional frame (40, 40") is made of a plastic material.

7. Bulkhead fitting (100', 100")) according to one of claims 5 or 6, wherein the wall (30) is made of a material selected from an elastomer, a thermoplastic elastomer or a thermoplastic.

8. Bulkhead fitting (100', 100") according to one of claims 5 to 7, wherein the additional frame (40, 40") comprises a plurality of openings allowing fluid communication between the two sub-spaces (V2a, V2b) of the second space (V2).

9. Bulkhead fitting (100") according to one of claims 5 to 8, wherein the or each orifice (OR") is in the form of a slot formed between said additional frame (40") and said wall (30) of the bulkhead fitting defining the second space (V2).

10. Assembly (200) comprising:

- a bulkhead (C) separating a passenger compartment from an engine compartment of an automotive vehicle;
- a member (O) passing through said bulkhead; and
- a bulkhead fitting (100, 100', 100") according to one of claims 1 to 4, or according to one of claims 5 to 9, mounted both on the member (O) and on the bulkhead (C).

11. Assembly (200) according to the preceding claim, wherein the member is chosen from a steering column, a cable or a cable harness.

*Fig. 1*
*( Art Antérieur )*

*Fig. 5*

Fig. 2

Fig. 3

Fig. 4

## RÉFÉRENCES CITÉES DANS LA DESCRIPTION

**Documents brevets cités dans la description**

- JP 5206929 B
- KR 20120048298
- WO 2016043245 A
- FR 2887208
- JP 10246334 B
- GB 2343718 A